# EUROPÄISCHE PATENTSCHRIFT

(11) **EP 3 981 599 B1**
(45) Veröffentlichungstag und Bekanntmachung des Hinweises auf die Patenterteilung: **13.12.2023**
(21) Anmeldenummer: 20200967.6
(22) Anmeldetag: 09.10.2020
(51) Int. Cl.: B32B 41/00, B32B 37/08, B32B 37/06

(54) **VORRICHTUNG UND VERFAHREN ZUM KASCHIEREN EINES SUBSTRATS MIT EINER THERMOPLASTISCHEN FOLIE**
DEVICE AND METHOD FOR LAMINATING A SUBSTRATE WITH A THERMOPLASTIC FILM
DISPOSITIF ET PROCÉDÉ DE CONTRECOLLAGE D'UN SUBSTRAT À L'AIDE D'UNE FEUILLE THERMOPLASTIQUE

(43) Veröffentlichungstag der Anmeldung: 13.04.2022
(73) Patentinhaber: Henkel AG & Co. KGaA, 40589 Düsseldorf (DE)
(72) Erfinder: ETHNER, Kai, 40764 Langenfeld (DE); KINZELMANN, Georg, 50259 Pulheim (DE)
(74) Vertreter: Wagner Albiger & Partner Patentanwälte mbB

(56) Entgegenhaltungen:
- EP-B1- 3 183 117
- DE-A1- 2 741 428
- DE-T2- 3 785 338
- DE-U1-202017 006 956
- DE-U1-202020 102 523
- US-A- 5 141 583
- US-B1- 6 337 126
- Unknown: "Tension Control Complete Guide TENSION CONTROLLER ELECTROMAGNETIC CLUTCHES AND BRAKES", , 31. Dezember 2019 (2019-12-31), XP055784228, Gefunden im Internet: URL:https://dl.mitsubishielectric.co.jp/dl /fa/document/catalog/clutch/sh-170011eng/s h170011-c.pdf [gefunden am 2021-03-10]

## Beschreibung

Die vorliegende Erfindung betrifft ein Verfahren sowie eine Vorrichtung zum kontinuierlichen Kaschieren eines Substrats mit einem thermoplastischen Beschichtungsmaterial, insbesondere einer Folie. Bei dem Substrat kann es sich dabei ebenfalls um eine Folie handeln. Es kann sich jedoch auch um einen festen Körper aus Kunststoff, Metall oder einem anderen Material handeln.

Es sind verschiedene Verfahren zum Kaschieren von Substraten mit einer thermoplastischen Folie bekannt. Die EP 3 183 117 B1 beschreibt ein Verfahren sowie eine Vorrichtung zum Verkleben von zwei folienförmigen Substraten, wobei zumindest die eine Folie auf einem Förderband derart an einer Kühl- und Heizeinrichtung vorbeigeführt wird, dass die eine Seite der Folie gekühlt, die andere jedoch geheizt wird.

Die EP 3 526 042 B1 offenbart ein ähnliches Verfahren, bei dem jedoch die eine Folie auf einer gekühlten Walze geführt und anschließend auch auf dieser Walze mit der zweiten Folie verbunden wird. Ein solches Verfahren ist auch aus der DE 20 2017 006 956 U1 bekannt.

Die D E 20 2020 102 523 U1 offenbart ebenfalls eine Kaschiervorrichtung.

Wie sich herausgestellt hat, kommt es häufig zu Qualitätsminderungen in der Oberfläche der Folie, die Probleme beim Kaschieren verursachen.

Es ist daher eine Aufgabe der vorliegenden Erfindung, eine Vorrichtung und ein Verfahren zum Kaschieren eines Substrats mit einer thermoplastischen Folie anzugeben, die die genannten Nachteile nicht aufweisen.

Diese Aufgabe wird gelöst mit dem Gegenstand der unabhängigen Patentansprüche. Vorteilhafte Ausgestaltungen und Weiterentwicklungen sind Gegenstand der Unteransprüche.

Gemäß einem Aspekt der Erfindung wird eine Vorrichtung zum Kaschieren eines Substrats mit einer thermoplastischen Folie angegeben, wobei die Vorrichtung ein Kaschierwerk zum Kaschieren des Substrats mit der thermoplastischen Folie aufweist sowie eine Zuführeinrichtung für die thermoplastische Folie zum Kaschierwerk. Die Zuführeinrichtung für die thermoplastische Folie weist Einrichtungen zum Heizen einer ersten Seite der Folie und Einrichtungen zum Kühlen einer zweiten Seite der Folie auf. Ferner weist sie eine Einrichtung zum Auffangen von an den Einrichtungen zum Kühlen entstehendem Kondensat auf.

Unter einem Kaschierwerk wird hier und im Folgenden eine Vorrichtung verstanden, die das Beschichten, insbesondere durch Zuhilfenahme von Druck, des Substrats mit der thermoplastischen Folie durchführt. Typischerweise sind hierfür Walzen vorgesehen, durch die die beiden Folien geführt sind, falls das Substrat als Folie ausgebildet ist. Falls das Substrat nicht als Folie ausgebildet ist, umfasst das Kaschierwerk häufig ebenfalls zumindest eine Walze, mittels der die thermoplastische Folie auf das Substrat gebracht wird.

Die Vorrichtung weist den Vorteil auf, dass an den Einrichtungen zum Kühlen sich bildendes Kondensat aufgefangen und gegebenenfalls abgeführt wird und nicht mit der Oberfläche der Folie in Berührung kommt. Somit können Schädigungen der Folienoberfläche durch Kondensat vermieden werden.

Zu Schädigungen der Folienoberfläche kann es kommen, wenn Kondensat in direkten Kontakt mit der Folie kommt. Dies ist beispielsweise der Fall, wenn die Folie mit ihrer zweiten Seite Kontakt zu einem Kühlkörper hat, beispielsweise zu einem gekühlten Förderband oder einer gekühlten Walze. Zudem kann es zu Schäden an der Folie oder an Anlagenteilen kommen, wenn Kondensat auf sie herabtropft. Durch das Entfernen des Kondensats wird dies verhindert.

Eine weitere Möglichkeit, einen Kontakt des Kondensats mit der Folie zu verhindern, ist, die Folie beabstandet von den Einrichtungen zum Kühlen zu führen. Dies bedeutet insbesondere, dass die Folie nicht mit gekühlten Oberflächen in direktem Kontakt steht. In diesem Fall sind ein Auffangen und eine Entfernung von Kondensat nicht in jedem Fall erforderlich, können jedoch trotzdem vorgesehen sein, beispielsweise, um ein Herabtropfen von Kondensat auf die Einrichtungen zum Heizen oder andere Anlagenteile zu verhindern.

Beide Möglichkeiten zur Vermeidung eines Kontaktes zwischen Folie und Kondensat können auch miteinander kombiniert werden.

Die Vorrichtung zum Kaschieren des Substrats mit einer thermoplastischen Folie kann darüber hinaus auch eine Zuführeinrichtung für das Substrat aufweisen, deren Ausgestaltung von der Art des Substrats abhängt. Als Einrichtungen zum Heizen der Folie können insbesondere Infrarotstrahler vorgesehen sein, jedoch auch andere Wärmequellen wie beispielsweise Laser. Zum Kühlen können beispielsweise gekühlte Bleche vorgesehen sein.

Die Einrichtung zum Auffangen von an den Einrichtungen zum Kühlen entstehendem Kondensat kann insbesondere wannenartig ausgebildet sein. Bei der Anordnung der Einrichtung zum Auffangen von an den Einrichtungen zum Kühlen entstehendem Kondensat wird berücksichtigt, wohin das Kondensat tropft. Insbesondere wird die Einrichtung zum Auffangen von Kondensat derart angeordnet, dass kein Kondensat auf die Folie oder empfindliche Anlagenteile gelangen kann.

Die Einrichtung zum Auffangen kann auch mehrere einzelne Elemente aufweisen, beispielsweise mehrere wannenartige Einrichtungen. Diese können auch ergänzt werden durch Einrichtungen, die das Kondensat von den kühlen Oberflächen entfernen, beispielsweise Abstreifern, die an den Oberflächen entlangstreifen, das Kondensat abnehmen und es der Wanne zuführen.

Gemäß einer Ausführungsform umfasst somit die Einrichtung zum Auffangen von Kondensat zumindest eine Vorrichtung zum Abstreifen von Kondensat von Oberflächen der Einrichtungen zum Kühlen. Bei dieser Ausführungsform können Oberflächen, an denen sich Kondensat bildet, nach der Entfernung dieses Kondensats mit der Folie in Kontakt gebracht werden, ohne dass die Gefahr einer Beschädigung der Folie besteht.

Gemäß einer Ausführungsform sind die Einrichtungen zum Kühlen unterhalb oder neben den Einrichtungen zum Heizen angeordnet. Auf diese Weise wird schon baulich vermieden, dass Kondensat auf die Einrichtungen zum Heizen herabtropfen kann.

Die Vorrichtung kann ferner eine Anzahl steuerbar angetriebener Walzen aufweisen, über die die Folie an den Einrichtungen zum Heizen und den Einrichtungen zum Kühlen vorbeigeführt ist, wobei eine Spannung der Folie über die Geschwindigkeit der angetriebenen Walzen regelbar ist.

Diese Ausführungsform weist den Vorteil auf, dass sie eine praktisch berührungslose Führung der thermoplastischen Folie mittels der steuerbar angetriebenen Walzen ermöglicht. Die Folie liegt demnach in der Zuführeinrichtung nicht flächig auf einem Förderband oder einer Walze mit großem Durchmesser oder einer anderen Oberfläche auf, sondern wird lediglich von den steuerbar angetriebenen Walzen punktuell unterstützt und gefördert und gegebenenfalls umgelenkt und ansonsten berührungslos geführt. Da die Drehgeschwindigkeit der angetriebenen Walzen steuerbar, insbesondere sogar regelbar ist, können Spannungen innerhalb der Folie durch den Aufbau von Geschwindigkeitsdifferenzen zwischen einzelnen Walzen ausgeglichen werden. Verliert beispielsweise die geführte Folie an Spannung, so kann eine Geschwindigkeitsdifferenz zwischen zwei Walzen derart eingestellt werden, dass die Folie wieder gespannt wird. Dies ist insbesondere vorteilhaft, da die Erwärmung der thermoplastischen Folie sowohl eine Ausdehnung als auch eine Aufweichung der Folie bewirkt.

Zudem hat die praktisch berührungslose Führung der Folie den Vorteil, dass diese besonders effizient erhitzt bzw. gekühlt werden kann.

Gemäß einer Ausführungsform sind angetriebene Walzen in Bewegungsrichtung der Folie in Förderrichtung der Folie zumindest vor und/oder hinter den Einrichtungen zum Kühlen und Heizen angeordnet, d.h. sie führen die Folie unmittelbar bevor diese die Einrichtungen zum Heizen und zum Kühlen durchläuft. Diese Ausführungsform hat den Vorteil, dass Längenänderungen der thermoplastischen Folie, die durch das Aufheizen bzw. Kühlen der Folie verursacht wurden, über eine Geschwindigkeitsregelung der Walzen ausgeglichen werden können.

Gemäß einer alternativen Ausführungsform ist die Folie zumindest abschnittsweise mittels eines Förderbandes geführt, auf dem sie aufliegt.

Die thermoplastische Folie ist insbesondere beabstandet zu den Einrichtungen zum Heizen geführt. Somit kommt die thermoplastische Folie nicht in Kontakt mit Elementen der Einrichtungen zum Heizen.

Die Einrichtungen zum Kühlen können zumindest eine gekühlte Walze umfassen, über die die Folie geführt ist. Alternativ kann die thermoplastische Folie beabstandet zu den Einrichtungen zum Kühlen geführt sein. Im letzteren Fall sind die Einrichtungen zum Kühlen entlang der zwischen den Walzen gespannten Folienbahn in der Zuführeinrichtung angeordnet, jedoch nicht auf derselben Seite der Folie wie die Einrichtungen zum Heizen, sondern auf der gegenüberliegenden Seite.

Wird die thermoplastische Folie beabstandet zu den Einrichtungen zum Kühlen geführt, hat dies den Vorteil, dass die Folie nicht mit Oberflächen in Berührung kommt, auf denen sich Kondensat bildet.

Gemäß einer Ausführungsform sind zwischen den Einrichtungen zum Heizen und der thermoplastischen Folie Gitter zum Schutz der Einrichtungen zum Heizen vor einem Kontakt mit der Folie angeordnet. Derartige Gitter haben den Vorteil, dass sie einen Kontakt zwischen der thermoplastischen Folie und den Einrichtungen zum Heizen verhindern. Als zusätzliche Sicherung kann die Zuführeinrichtung zumindest eine Einrichtung zur Erzeugung eines Luftstroms zwischen der thermoplastischen Folie und den Einrichtungen zum Heizen aufweisen.

Die Einrichtung zur Erzeugung eines Luftstroms kann als Gebläse, Druckluftquelle oder auch als Unterdruckquelle ausgebildet sein. Sie hat den Vorteil, dass bei zu geringer Bahnspannung der Folie oder im Falle eines Bahnrisses ein Ankleben der Folie am Gitter bzw. an der Heizvorrichtung vermieden wird. Dazu kann es vorgesehen sein, dass die Einrichtung zur Erzeugung eines Luftstroms bei Verlust der Bahnspannung automatisch und/oder manuell eingeschaltet wird. Dabei kann sie beispielsweise Kaltluft zwischen die Einrichtung zum Heizen und die Folie bzw. das Gitter einblasen. Ist ein Gitter vorgesehen, so entweicht die Luft durch das Gitter und bläst die Folie von den Einrichtungen zum Heizen weg.

Für die Anordnung der angetriebenen Walzen und gegebenenfalls weiterer Walzen oder Umlenkrollen bzw. des Förderbandes der Zuführeinrichtung gibt es verschiedene Möglichkeiten. Beispielsweise kann die thermoplastische Folie in der Zuführeinrichtung zumindest abschnittsweise senkrecht nach oben und/oder nach unten geführt sein. Sie kann jedoch auch zumindest abschnittsweise schräg nach oben und/oder nach unten geführt sein. Zudem kann die thermoplastische Folie zumindest abschnittsweise auf einem Kreisbogen geführt sein. Welche Anordnung gewählt wird, kann unter anderem von dem vorhandenen Platz und anderen praktischen Überlegungen abhängen.

Gemäß einer Ausführungsform weist die Zuführeinrichtung einen alternativen Zuführweg für die Folie auf, der keine Einrichtungen zum Heizen und keine Einrichtungen zu Kühlen umfasst. Auf diesem alternativen Zuführweg wird die Folie dem Kaschierwerk somit zugeführt, ohne dass sie geheizt wird. Der alternative Zuführweg kann beispielsweise verwendet werden, wenn keine thermoplastische Folie zum Kaschieren verwendet wird, sondern ein anderes Material, bzw. wenn die Verbindung zwischen der Folie und dem Substrat auf eine andere Weise, beispielsweise mittels eines separat aufgetragenen Klebstoffs, erfolgt. Insbesondere, wenn auf einer Anlage verschiedene Verfahren gleichzeitig oder abwechselnd zum Einsatz kommen sollen, ist das Vorhandensein des alternativen Zuführwegs von Vorteil.

Gemäß einem weiteren Aspekt der Erfindung wird ein Verfahren zum Kaschieren eines Substrats mit einer thermoplastischen Folie angegeben, wobei das Verfahren das Zuführen der Folie zu einem Kaschierwerk umfasst, wobei die Folie während des Zuführens auf einer ersten Seite beheizt und auf einer zweiten Seite gekühlt wird, wobei ein sich an Einrichtungen zum Kühlen bildendes Kondensat aufgefangen und gegebenenfalls abgeführt wird, so dass es nicht mit der Folie in Kontakt kommt.

Alternativ zum Auffangen und gegebenenfalls Abführen des Kondensats kann es vorgesehen sein, dass die Folie beabstandet von den Einrichtungen zum Kühlen geführt ist und somit nicht direkt mit gekühlten Oberflächen in Kontakt kommt.

Gemäß einer Ausführungsform erfolgt das Zuführen mittels einer Anzahl steuerbar angetriebener Walzen, über die die Folie geführt wird, wobei während des Zuführens eine Spannung der Folie über die Geschwindigkeit der angetriebenen Walzen gesteuert und insbesondere auch geregelt wird.

Insbesondere kann eine abschnittsweise Regelung der Geschwindigkeit in der Zuführeinrichtung vorgesehen sein, die durch eine individuelle Regelbarkeit der angetriebenen Walzen ermöglicht wird. Wenn die Walzen unabhängig voneinander in ihrer Geschwindigkeit regelbar sind, ist es möglich, zwischen aufeinanderfolgenden Walzen Differenzgeschwindigkeiten einzustellen, über die eine Spannung in der Folie auf- oder abgebaut werden kann.

Dem Kaschierwerk wird ferner das Substrat zugeführt, das in Form einer Folie oder in anderer Form vorliegen kann.

Gemäß einer Ausführungsform wird die Folie durch einen in einen Zwischenraum zwischen der Folie und den Einrichtungen zum Heizen eingeblasenen Luftstrom auf Abstand von den Einrichtungen zum Heizen gehalten. Dazu kann insbesondere vorgesehen sein, dass in den Zwischenraum eingeblasene Luft durch Öffnungen in einem Gitter austritt und die Folie von den Einrichtungen zum Heizen wegbläst.

Ausführungsformen der Erfindung werden im Folgenden anhand von schematischen Figuren näher erläutert.
- Figur 1: zeigt schematisch eine Vorrichtung zum Kaschieren eines Substrats mit einer thermoplastischen Folie gemäß einer ersten Ausführungsform der Erfindung;
- Figur 2: zeigt schematisch eine Vorrichtung zum Kaschieren eines Substrats mit einer thermoplastischen Folie gemäß einer zweiten Ausführungsform der Erfindung;
- Figur 3: zeigt schematisch eine Vorrichtung zum Kaschieren eines Substrats mit einer thermoplastischen Folie gemäß einer dritten Ausführungsform der Erfindung;
- Figur 4: zeigt schematisch eine Vorrichtung zum Kaschieren eines Substrats mit einer thermoplastischen Folie gemäß einer vierten Ausführungsform der Erfindung und
- Figur 5: zeigt schematisch eine Vorrichtung zum Kaschieren eines Substrats mit einer thermoplastischen Folie gemäß einer fünften Ausführungsform der Erfindung.

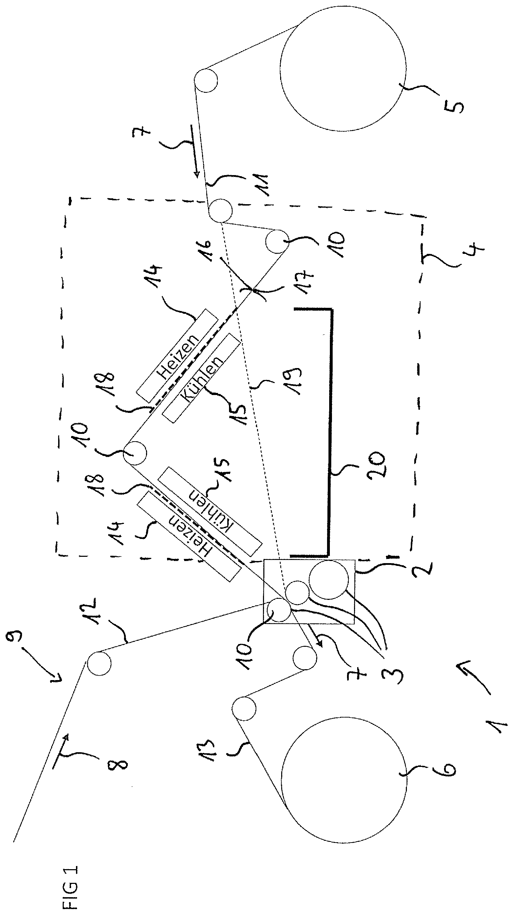

Figur 1 zeigt eine Vorrichtung 1 zum Kaschieren eines Substrats mit einer thermoplastischen Folie. In der Figur 1 ist die thermoplastische Folie mit dem Bezugszeichen 11 bezeichnet, das Substrat mit dem Bezugszeichen 12 und das bereits kaschierte Substrat mit dem Bezugszeichen 13.

Die Vorrichtung 1 umfasst ein Kaschierwerk 2, das insbesondere eine Anzahl von Walzen 3 zum Andrücken der Folie 11 an das Substrat 12 aufweist. Ferner umfasst die Vorrichtung 1 eine Zuführeinrichtung 4 für die thermoplastische Folie 11 zu dem Kaschierwerk 2. Die Folie 11 wird dabei von einem Abroller 5 abgerollt und mittels der Zuführeinrichtung 4 zu dem Kaschierwerk 2 transportiert, wonach das beschichtete Substrat 13 durch den Aufroller 6 aufgerollt wird.

Die Zuführeinrichtung 4 weist eine Anzahl regelbar angetriebener Walzen 10 auf. In der gezeigten Ausführungsform sind drei angetriebene Walzen 10 dargestellt. Diese Darstellung ist jedoch nur beispielhaft und es können auch mehr oder weniger angetriebene Walzen vorgesehen sein.

Die Zuführeinrichtung 4 umfasst weitere Walzen oder Rollen, die zur Führung und Umlenkung der Folie 11 dienen und lediglich beispielhaft gezeigt und nicht näher bezeichnet sind. Die thermoplastische Folie 11 wird mittels der angetriebenen Walzen 10 in Richtung des Pfeils 7 zu dem Kaschierwerk 2 transportiert. Das Substrat 12 wird in der gezeigten Ausführungsform ebenfalls mittels einer geeigneten Zuführeinrichtung 9 entlang des Pfeils 8 zu dem Kaschierwerk 2 transportiert. Nach dem Kaschieren wird das kaschierte Substrat 13 entlang des Pfeils 7 zu dem Aufroller 6 transportiert.

Die Folie 11 wird größtenteils berührungslos geführt. Lediglich im Bereich der Walzen 10 wird die Folie 11 punktuell geführt bzw. unterstützt. Zwischen den Walzen 10 ist die Folie 11 nicht unterstützt. Sie weist somit eine Spannung auf, die insbesondere durch die auf sie wirkende Schwerkraft und durch die Drehgeschwindigkeiten der Walzen 10 bedingt ist.

Entlang ihres Weges durch die Zuführeinrichtung 4 wird die thermoplastische Folie 11 zwischen den Walzen 10 an Einrichtungen 14 zum Heizen einer ersten Seite 16 der Folie 11 und Einrichtungen 15 zum Kühlen einer zweiten Seite 17 der Folie 11 vorbeigeführt. Auch die Einrichtungen 14 zum Heizen und die Einrichtungen 15 zum Kühlen sind hier lediglich beispielhaft dargestellt. Die Anzahl und Anordnung der Einrichtungen 14 zum Heizen und der Einrichtungen 15 zum Kühlen können variieren.

Das Beheizen der ersten Seite 16 bewirkt ein Erweichen bis teilweises Aufschmelzen der thermoplastischen Folie 11 an ihrer ersten Seite 16, sodass sich diese in dem Kaschierwerk 2 mit dem Substrat 12 verbinden kann. Die Kühlung der zweiten Seite 17 dient dazu, die Folie 11 nicht vollständig aufschmilzen zu lassen und eine gewisse Stabilität zu erhalten, die für den Transportprozess zum Kaschierwerk 2 erforderlich ist. Somit kompensiert die Kühlung die eingebrachte Wärme teilweise. Insbesondere kann sie die Abwärme kompensieren, falls die Einrichtungen zum Heizen als Infrarotstrahler ausgebildet sind.

Die Folie 11 wird von den Einrichtungen 14 zum Heizen und den Einrichtungen 15 zu Kühlen beabstandet geführt und kommt somit nicht in direkten Kontakt mit gekühlten Oberflächen. Zwischen den Einrichtungen zum Heizen 14 und der Folie 11 sind Gitter 18 angeordnet, die ein Anhaften der Folie 11 an den Einrichtungen 14 zum Heizen verhindern sollen.

Die Zuführeinrichtung 4 weist einen alternativen Zuführweg für eine Folie zu dem Kaschierwerk 2 auf, der in Figur 1 durch eine gestrichelte Linie 19 angedeutet ist und der nicht an den Einrichtungen 14 zum Heizen und 15 zum Kühlen vorbeigeführt wird. Der alternative Weg kann für eine Folie genutzt werden, die nicht aus einem thermoplastischen Material besteht oder aus anderen Gründen nicht geheizt bzw. gekühlt werden soll.

Die Vorrichtung 1 umfasst ferner eine Wanne 20 zum Auffangen von Kondensat, das sich aufgrund der feuchten Raumluft an den Einrichtungen 15 zum Kühlen bildet. Die Wanne 20 ist unterhalb der Einrichtungen 15 zum Kühlen angeordnet, sodass Kondensat der Schwerkraft folgend von den Einrichtungen 15 zum Kühlen abfließt und in die Wanne 20 tropft. Auf diesem Weg passiert das Kondensat keine weiteren Elemente der Zuführeinrichtung 4, insbesondere nicht die Einrichtungen 14 zum Heizen oder die Folienbahn, die durch das Kondensat beschädigt werden könnten. Die Wanne 20 ist somit derart platziert, dass sich an den Einrichtungen 15 bildendes Kondensat unmittelbar in die Wanne 20 tropfen kann. Durch die Abführung des Kondensats wird erreicht, dass kein Kondensat mit der Folie 11 in Berührung kommt, was Qualitätseinbußen der Oberfläche zur Folge haben könnte.

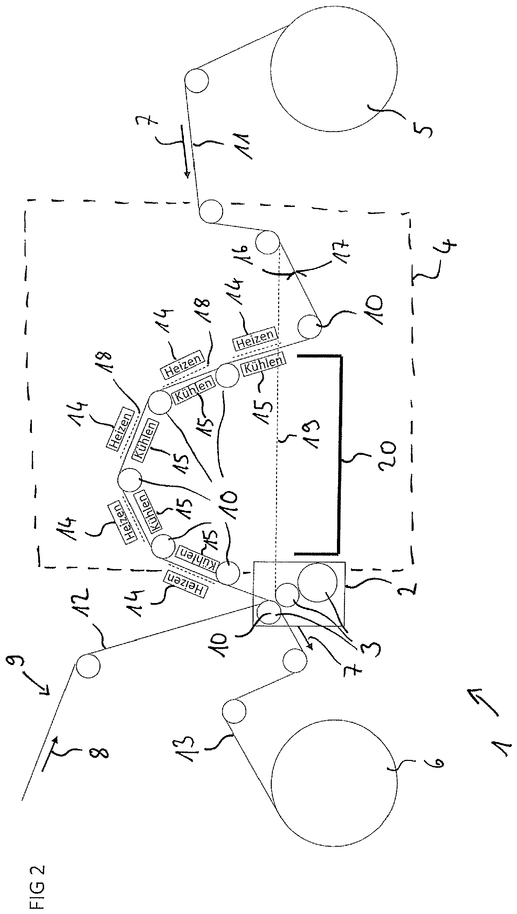

Figur 2 zeigt eine zweite Ausführungsform einer Vorrichtung 1 zum Kaschieren eines Substrats mit einer thermoplastischen Folie. Diese Vorrichtung 1 unterscheidet sich von der in Figur 1 gezeigten Ausführungsform dadurch, dass mehrere angetriebene Walzen 10 vorgesehen sind, die die Folie 11 auf einer Halbkreisbahn führen.

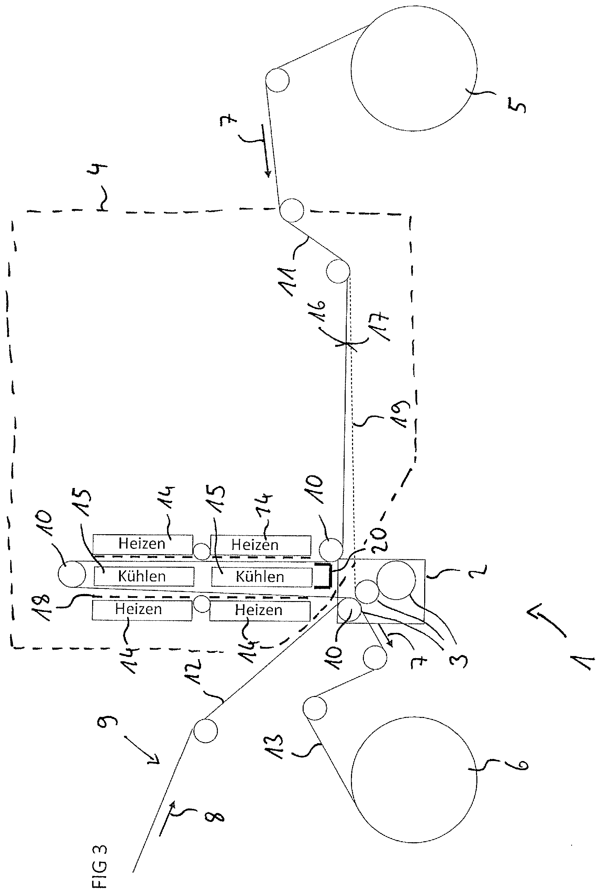

Figur 3 zeigt eine dritte Ausführungsform der Vorrichtung 1 zum Kaschieren eines Substrats mit einer thermoplastischen Folie 11. Diese Ausführungsform unterscheidet sich von den vorher gezeigten dadurch, dass mehrere angetriebene Walzen 10 übereinander angeordnet sind, sodass die Folie 11 abschnittsweise vertikal geführt ist. In der gezeigten Ausführungsform sind auch jeweils zwei Einrichtungen 14 zum Heizen und zwei Einrichtungen zum Kühlen 15 übereinander angeordnet.

Diese Anordnung ist besonders platzsparend und auch auf kleinem Bauraum zu verwirklichen. Die Einrichtungen 15 zum Kühlen sind in diese Ausführungsform übereinander angeordnet, jedoch nicht oberhalb von Einrichtungen 14 zum Heizen, damit kein Kondensat auf die Einrichtungen 14 zum Heizen tropfen kann. Unmittelbar unterhalb der unteren Einrichtung 15 zum Kühlen ist wiederum eine Wanne 20 zum Auffangen von Kondensat vorgesehen.

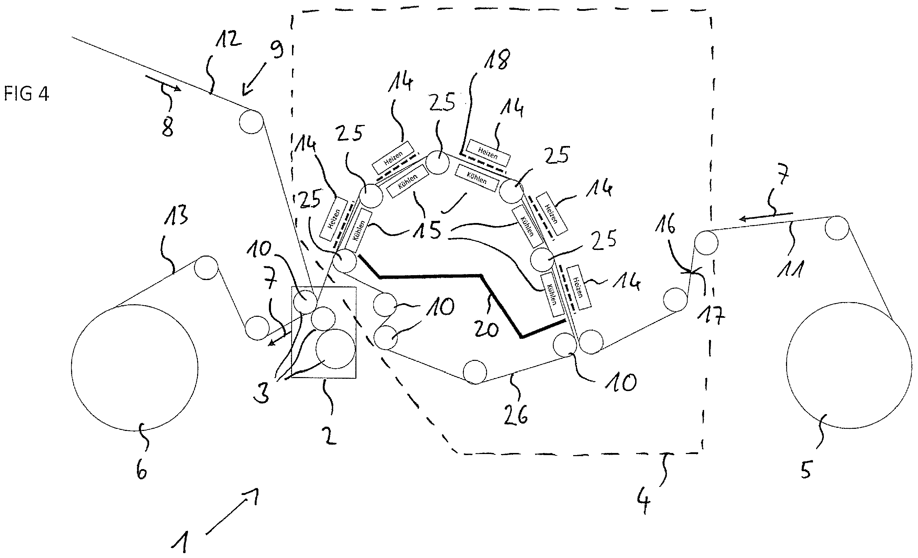

Figur 4 zeigt eine vierte Ausführungsform der Vorrichtung 1 zum Kaschieren eines Substrats 12 mit einer thermoplastischen Folie 11. Diese Ausführungsform unterscheidet sich von den vorher gezeigten dadurch, dass die Folie 11 in der Zuführeinrichtung 4 auf einem Förderband 26 mittels nicht angetriebener Walzen 25 geführt ist. Das Förderband 26 ist beabstandet von den Einrichtungen 15 zum Kühlen geführt. Die Wanne 20 zum Auffangen des Kondensats ist dabei derart zwischen den Einrichtungen 15 zum Kühlen und weiteren Elementen der Zuführeinrichtung 4 angeordnet, dass das Kondensat unmittelbar in die Wanne 20 tropft und nicht mit weiteren Elementen in Berührung kommt.

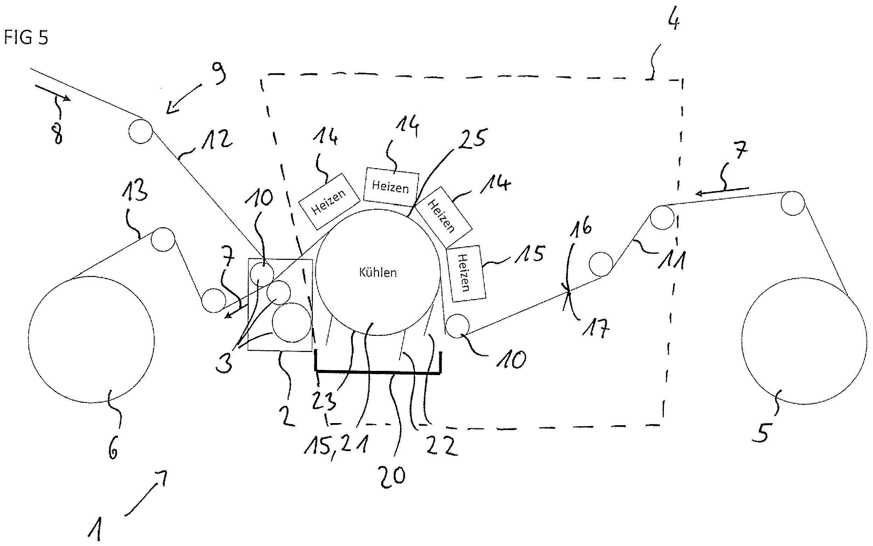

Figur 5 zeigt eine fünfte Ausführungsform der Vorrichtung 1 zum Kaschieren eines Substrats 12 mit einer thermoplastischen Folie 11. Diese Ausführungsform unterscheidet sich von den vorher gezeigten dadurch, dass die Folie 11 in der Zuführeinrichtung 4 teilweise nicht berührungslos geführt ist, sondern mittels einer gekühlten Walze 21. Die Folie 11 liegt somit mit ihrer zweiten Seite 17 stellenweise auf der Oberfläche der gekühlten Walze 21 auf. Die gekühlte Walze 21 kann ebenfalls in ihrer Geschwindigkeit regelbar angetrieben sein.

Bei dieser Ausführungsform sind Abstreifer 22 vorgesehen, die an der gekühlten Walze 21 entstehendes Kondensat von der Walze 21 abstreifen und in die Wanne 20 tropfen lassen. Dabei sind die Abstreifer 22 im Bereich einer Unterseite 23 der Walze 21 angeordnet, während die Folie 11 auf der Oberseite 24 der Walze 21 geführt ist. Auf diese Weise wird vermieden, dass die Folie 11 mit Kondensat auf der Oberfläche der Walze 21 in Berührung kommt, was Qualitätseinbußen der Folienoberfläche bewirken könnte.

Die angetriebene Walze 10 kurz vor der gekühlten Walze 21 ermöglicht eine Regelung der Bahnspannung der Folie 11, beispielsweise in Reaktion auf eine nachlassende Spannung wegen des Aufheizens der Folie 11.

### Bezugszeichenliste

- 1: Vorrichtung
- 2: Kaschierwerk
- 3: Walze
- 4: Zuführeinrichtung
- 5: Abroller
- 6: Aufroller
- 7: Pfeil
- 8: Pfeil
- 9: Zuführeinrichtung
- 10: Walze
- 11: Folie
- 12: Substrat
- 13: kaschiertes Substrat
- 14: Einrichtung zum Heizen
- 15: Einrichtung zum Kühlen
- 16: erste Seite
- 17: zweite Seite
- 18: Gitter
- 19: gestrichelte Linie
- 20: Wanne
- 21: Walze
- 22: Abstreifer
- 23: Unterseite
- 24: Oberseite
- 25: Walze
- 26: Förderband

## Patentansprüche

1. Vorrichtung (1) zum Kaschieren eines Substrats (12) mit einer thermoplastischen Folie (11), wobei die Vorrichtung (1) folgendes aufweist:
- ein Kaschierwerk (2) zum Kaschieren des Substrats (12) mit der thermoplastischen Folie (11),
- eine Zuführeinrichtung (4) für die thermoplastische Folie (11) zum Kaschierwerk (2),
wobei die Zuführeinrichtung (4) für die thermoplastische Folie (11) Einrichtungen (14) zum Heizen einer ersten Seite (16) der Folie (11) und Einrichtungen (15) zum Kühlen einer zweiten Seite (17) der Folie (11) aufweist sowie eine Einrichtung (20) zum Auffangen von an den Einrichtungen (15) zum Kühlen entstehendem Kondensat.

2. Vorrichtung (1) nach Anspruch 1,
wobei die Einrichtungen (15) zum Kühlen zumindest eine gekühlte Walze (21) umfassen, über die die Folie (11) geführt ist.

3. Vorrichtung (1) nach Anspruch 1,
wobei die thermoplastische Folie (11) beabstandet zu den Einrichtungen (15) zum Kühlen geführt ist.

4. Vorrichtung nach einem der Ansprüche 1 bis 3,
wobei die Einrichtung (20) zum Auffangen von Kondensat zumindest eine Vorrichtung zum Abstreifen von Kondensat von Oberflächen der Einrichtungen (15) zum Kühlen umfasst.

5. Vorrichtung (1) nach einem der Ansprüche 1 bis 4,
ferner umfassend eine Anzahl steuerbar angetriebener Walzen (10), über die die Folie (11) an den Einrichtungen (14) zum Heizen und den Einrichtungen (15) zum Kühlen vorbei geführt ist, wobei eine Spannung der Folie (11) über die Geschwindigkeit der angetriebenen Walzen (10) regelbar ist.

6. Vorrichtung (1) nach einem der Ansprüche 1 bis 5,
ferner umfassend ein Förderband (26), auf dem die Folie (11) zumindest abschnittsweise geführt ist.

7. Vorrichtung (1) nach einem der Ansprüche 1 bis 6,
wobei zwischen den Einrichtungen (14) zum Heizen und der thermoplastischen Folie (11) Gitter (18) zum Schutz der Einrichtungen (14) zum Heizen vor einem Kontakt mit der Folie (11) angeordnet sind.

8. Vorrichtung (1) nach einem der Ansprüche 1 bis 7,
wobei die Zuführeinrichtung (4) zumindest eine Einrichtung zur Erzeugung eines Luftstroms zwischen der thermoplastischen Folie (11) und den Einrichtungen (14) zum Heizen aufweist.

9. Vorrichtung (1) nach einem der Ansprüche 1 bis 8,
wobei die thermoplastische Folie (11) in der Zuführeinrichtung (4) zumindest abschnittsweise senkrecht nach oben und/oder nach unten und/oder abschnittsweise schräg nach oben und/oder nach unten und/oder abschnittsweise auf einem Kreisbogen geführt ist.

10. Vorrichtung (1) nach einem der Ansprüche 1 bis 9,
wobei die Zuführeinrichtung (4) einen alternativen Zuführweg für eine Folie (11) aufweist, der keine Einrichtungen (14) zum Heizen und keine Einrichtungen (15) zum Kühlen umfasst.

11. Verfahren zum Kaschieren eines Substrats (12) mit einer thermoplastischen Folie (11), wobei das Verfahren das Zuführen der Folie (11) zu einem Kaschierwerk (2) umfasst, wobei die Folie (11) während des Zuführens auf einer ersten Seite (16) beheizt und auf einer zweiten Seite (17) gekühlt wird, wobei ein sich an Einrichtungen (15) zum Kühlen bildendes Kondensat aufgefangen wird.

12. Verfahren nach Anspruch 11,
wobei das Zuführen mittels einer Anzahl steuerbar angetriebener Walzen (10) erfolgt, über die die Folie (11) geführt wird, wobei während des Zuführens eine Spannung der Folie (11) über die Geschwindigkeit der angetriebenen Walzen (10) geregelt wird.

13. Verfahren nach Anspruch 11 oder 12,
wobei die Folie (11) durch einen in einen Zwischenraum zwischen der Folie (11) und den Einrichtungen (14) zum Heizen eingeblasenen Luftstrom auf Abstand von den Einrichtungen zum Heizen (14) gehalten wird.

## Claims

1. An apparatus (1) for laminating a substrate (12) with a thermoplastic film (11), the apparatus (1) comprising the following:
- a laminating unit (2) for laminating the substrate (12) with the thermoplastic film (11),
- a feed device (4) for feeding the thermoplastic film (11) to the laminating unit (2), wherein the feed device (4) for the thermoplastic film (11) comprises devices (14) for heating a first side (16) of the film (11) and devices (15) for cooling a second side (17) of the film (11), and a device (20) for collecting condensate produced on the devices (15) for cooling.

2. The apparatus (1) according to claim 1,
wherein the devices (15) for cooling comprise at least one cooled roller (21) over which the film (11) is guided.

3. The apparatus (1) according to claim 1,
wherein the thermoplastic film (11) is guided at a distance from the devices (15) for cooling.

4. The apparatus according to one of claims 1 to 3,
wherein the device (20) for collecting condensate comprises at least one apparatus for scraping condensate off surfaces of the devices (15) for cooling.

5. The apparatus (1) according to one of claims 1 to 4,
further comprising a number of controllably driven rollers (10) over which the film (11) is guided past the devices (14) for heating and the devices (15) for cooling, wherein a tension of the film (11) can be regulated by the speed of the driven rollers (10).

6. The apparatus (1) according to one of claims 1 to 5,
further comprising a conveyor belt (26) on which the film (11) is guided at least in sections.

7. The apparatus (1) according to one of claims 1 to 6,
wherein, between the devices (14) for heating and the thermoplastic film (11), grids (18) are arranged for protecting the devices (14) for heating from contacting the film (11).

8. The apparatus (1) according to one of claims 1 to 7,
wherein the feed device (4) has at least one device for generating an air flow between the thermoplastic film (11) and the devices (14) for heating.

9. The apparatus (1) according to one of claims 1 to 8,
wherein the thermoplastic film (11) is guided in the feed device (4) vertically upward and/or downward at least in sections and/or obliquely upward and/or downward in sections and/or in sections on a circular arc.

10. The apparatus (1) according to one of claims 1 to 9,
wherein the feed device (4) has an alternative feed path for a film (11), which path does not comprise any devices (14) for heating or any devices (15) for cooling.

11. A method for laminating a substrate (12) with a thermoplastic film (11), wherein the method comprises feeding the film (11) to a laminating unit (2), wherein, during the feeding, the film (11) is heated on a first side (16) and cooled on a second side (17), wherein condensate forming on devices (15) for cooling is collected.

12. The method according to claim 11,
wherein the feeding is carried out by means of a number of controllably driven rollers (10) over which the film (11) is guided, wherein, during the feeding, a tension of the film (11) is regulated by the speed of the driven rollers (10).

13. The method according to claim 11 or 12,
wherein the film (11) is held at a distance from the devices (14) for heating by an air flow blown into a space between the film (11) and the devices (14) for heating.

## Revendications

1. Dispositif (1) de laminage d'un substrat (12) avec un film thermoplastique (11), dans lequel le dispositif (1) présente ce qui suit :
- un système de laminage (2) pour le laminage du substrat (12) avec le film thermoplastique (11),
- un dispositif d'amenée (4) du film thermoplastique (11) au système de laminage (2),
dans lequel le dispositif d'amenée (4) du film thermoplastique (11) présente des dispositifs (14) de chauffage d'une première face (16) du film (11) et des dispositifs (15) de refroidissement d'une seconde face (17) du film (11) ainsi qu'un dispositif (20) de récupération d'un condensat produit dans les dispositifs (15) de refroidissement.

2. Dispositif (1) selon la revendication 1,
dans lequel les dispositifs (15) de refroidissement comprennent au moins un rouleau refroidi (21) sur lequel le film (11) est guidé.

3. Dispositif (1) selon la revendication 1,
dans lequel le film thermoplastique (11) est guidé à distance des dispositifs (15) de refroidissement.

4. Dispositif selon l'une des revendications 1 à 3,
dans lequel le dispositif (20) de récupération de condensat comprend au moins un dispositif d'élimination de l'excès du condensat des surfaces des dispositifs (15) de refroidissement.

5. Dispositif (1) selon l'une des revendications 1 à 4,
comprenant en outre un certain nombre de rouleaux (10) à entraînement commandable, sur lesquels le film (11) est guidé devant les dispositifs (14) de chauffage et les dispositifs (15) de refroidissement, dans lequel une tension du film (11) peut être réglée par la vitesse des rouleaux (10) entraînés.

6. Dispositif (1) selon l'une des revendications 1 à 5,
comprenant en outre une bande transporteuse (26), sur laquelle le film (11) est guidé au moins partiellement.

7. Dispositif (1) selon l'une des revendications 1 à 6,
dans lequel, entre les dispositifs (14) de chauffage et le film thermoplastique (11), des grilles (18) de protection des dispositifs (14) de chauffage sont agencées avant un contact avec le film (11).

8. Dispositif (1) selon l'une des revendications 1 à 7,
dans lequel le dispositif d'amenée (4) présente au moins un dispositif de génération d'un flux d'air entre le film thermoplastique (11) et les dispositifs (14) de chauffage.

9. Dispositif (1) selon l'une des revendications 1 à 8,
dans lequel le film thermoplastique (11) dans le dispositif d'amenée (4) est guidé au moins partiellement verticalement vers le haut et/ou vers le bas et/ou partiellement obliquement vers le haut et/ou vers le bas et/ou partiellement sur un arc circulaire.

10. Dispositif (1) selon l'une des revendications 1 à 9,
dans lequel le dispositif d'amenée (4) présente un chemin d'amenée alternatif pour un film (11), lequel chemin ne comprend aucun dispositif (14) de chauffage et aucun dispositif (15) de refroidissement.

11. Procédé de laminage d'un substrat (12) avec un film thermoplastique (11), dans lequel le procédé comprend l'amenée du film (11) vers un système de laminage (2), dans lequel, pendant l'amenée, une première face (16) du film (11) est chauffée et une seconde face (17) est refroidie, dans lequel un condensat se formant dans les dispositifs (15) de refroidissement est récupéré.

12. Procédé selon la revendication 11,
dans lequel l'amenée se fait à l'aide d'un certain nombre de rouleaux (10) à entraînement commandable, sur lesquels le film (11) est guidé, dans lequel, pendant l'amenée, une tension du film (11) est réglée par la vitesse des rouleaux (10) entraînés.

13. Procédé selon la revendication 11 ou 12,
dans lequel le film (11) est maintenu, par un flux d'air injecté dans l'espace entre le film (11) et les dispositifs (14) de chauffage, à distance des dispositifs (14) de chauffage.
